# EUROPEAN PATENT APPLICATION

(11) **EP 2 227 930 A1**
(43) Date of publication of application: **15.09.2010**
(21) Application number: 10155381.6
(22) Date of filing: 03.03.2010
(51) Int. Cl.: A01B 23/06

(54) **Ground engaging machine**

(30) Priority: 12.03.2009 US 402618
(71) Applicant: DEERE & COMPANY, Moline, Illinois 61265-8098 (US)
(72) Inventor: Martin, Robert W, Parkview, IA 52748 (US)
(74) Representative: Reichert, Christian

(57) **Abstract**

A ground engaging machine having an opener assembly (10) comprising a disk blade (30), a support member (40), and a scraper (42) having a scraper edge (44). The scraper is attached to the support member (40) of the opener assembly (10) with a two point connection. One connection point (54) allows rotation of the scraper about three orthogonal axes while the other connection point (56) restricts rotation about one of the axes and biases the scraper edge (44) into contact with the disk blade (30).

## Description

The present invention relates to a ground engaging machine having an opener assembly comprising a disk blade, a support member, and a scraper having a scraper edge.

Single disk openers for a ground engaging machine, such as a planter, have a disk shaped flat blade that is set at an angle to the direction of travel. The blade is forced into the ground and pulled forward to create a furrow. A scraper or boot is held against the blade on the furrow side of the blade. The scraper has several functions. The first function is to scrape soil off the blade that may stick to the furrow side of the blade. The second function is to shape and hold the furrow open long enough to apply a product into the furrow. The third function is to protect the product tubes from wear and damage from the soil. The scraper may also support the product tube or tubes. One problem with this arrangement is that the blade flexes toward the scraper while in use. The amount of flex can vary depending on the firmness of the soil, the depth of blade penetration and the travel speed. Mounting the scraper with a simple one axis pivot doesn't allow the scraper to maintain contact with the blade along the entire scraping edge, through the entire range of blade flex. This creates a gap between the scraper and the blade which then allows soil to build up between the two. With the right soil conditions, it will stop the blade from rotation and proper functioning of the opener will cease. A means of mounting the scraper such that the scraper floats with the blade as the blade flexes and maintains contact along the entire scraping edge regardless of the amount the of blade flex is needed.

Accordingly, an object of the invention is to provide a ground engaging machine of the above mentioned type which overcomes one or more of the before mentioned problems.

The object will be achieved by the teaching of claim 1. Advantageous embodiments of the invention are defined by the accompanying claims.

According to the invention a ground engaging machine of the above mentioned type comprises a ball and socket mechanism coupling the scraper to the support member for pivotal motion, and a biasing mechanism urging the scraper edge into contact with the disk blade.

The scraper is attached to the main opener arm of an opener assembly with a two point connection. One connection point, by itself, allows rotation of the scraper about three orthogonal axes. The other connection point operates to prohibit rotation of the scraper about one of the three axes and further operates to bias the scraper to urge the scraper edge into contact with the disk blade. The scraper is free to float, or move, with the blade as the blade flexes to maintain contact between the blade and scraper edge.
- Fig. 1: is a side view of the opener assembly;
- Fig. 2: is a lower rear perspective view of the disk and scraper of the opener assembly;
- Fig. 3: is an exploded lower rear perspective view showing the disk, scraper and the mounting structure for the scraper;

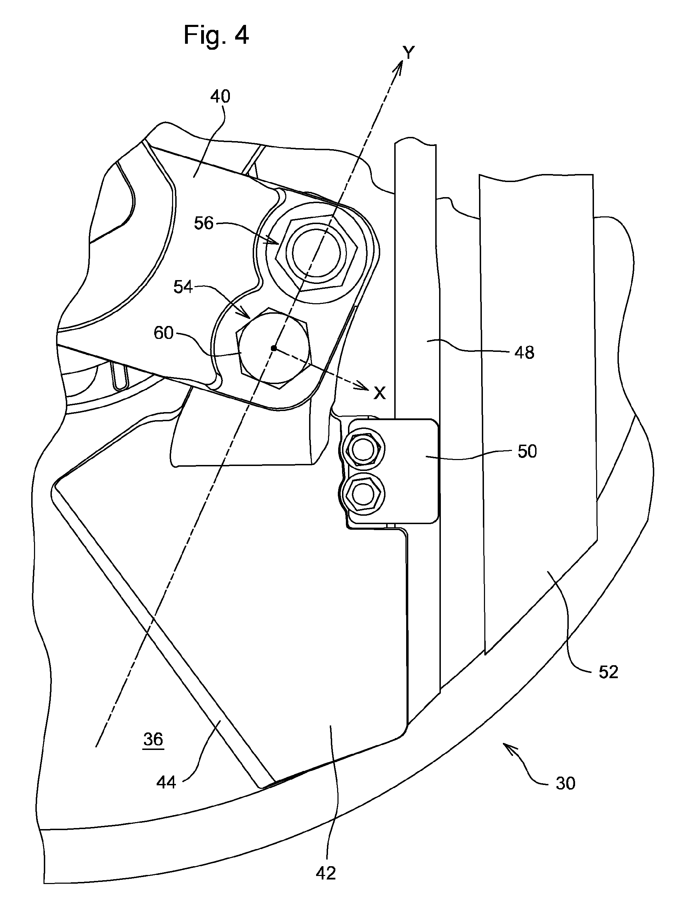

- Fig. 4: is a side view of the disk and scraper of the opener assembly;

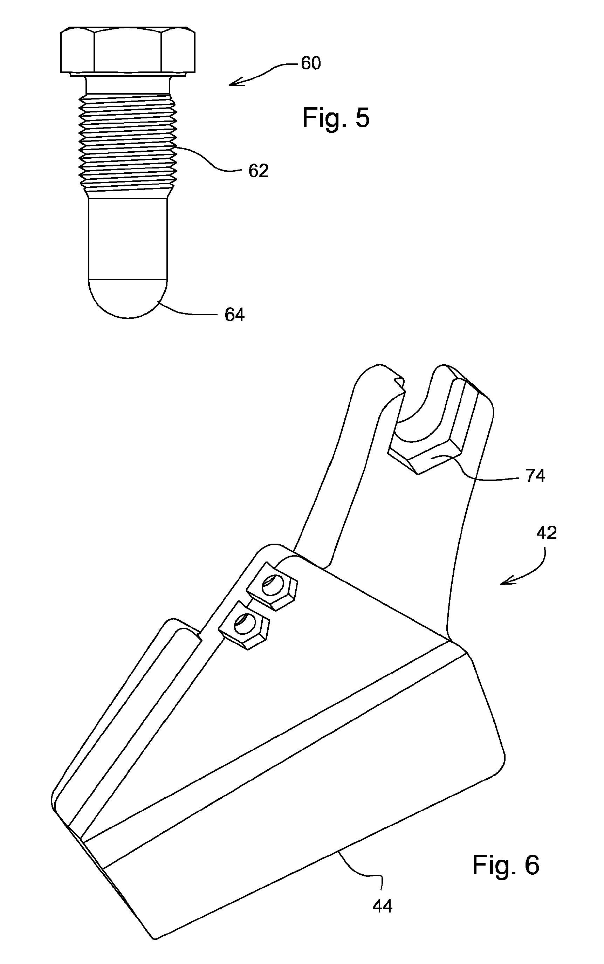

- Fig. 5: is a side view of the ball stud;
- Fig. 6: is a side view of the scraper.

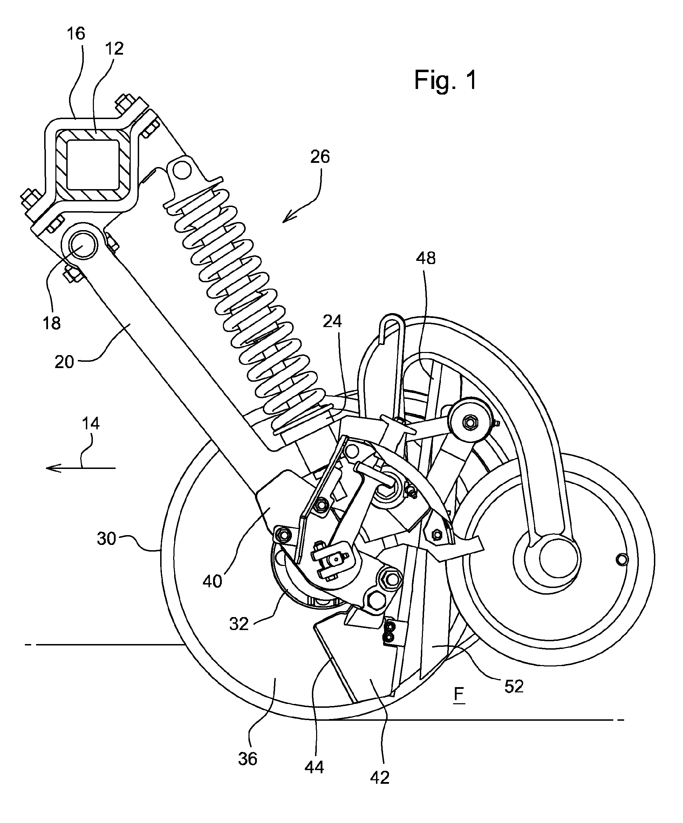

Referring now to Fig. 1, an opener assembly 10 is shown connected to a transversely extending frame or toolbar 12 of a ground engaging implement such as a planter. The implement is designed for forward movement over the ground in the direction of arrow 14 to deposit materials such a seed and/or fertilizer in a furrow F formed by the assembly 10. A bracket 16 is connected to the tool bar 12 and includes a lower pivot 18 supporting the upper end of a drawbar 20. A spring support 24 is connected near the lower aft end of the drawbar 20 and a down pressure spring and tensioning assembly 26 biases the aft end downward and limits downward movement of the drawbar 20 about the pivot 18 when the toolbar 12 is raised from the field working positioned shown in Fig. 1 to a transport position.

A disk 30 is supported for rotation about an axis by a wheel hub 32 and a bearing assembly (not shown) located at the lower end of the drawbar 20. The axis of rotation of the disk is angled slightly from a direction transverse to the forward direction 14 so that the disk 30 is steered slightly from the forward direction to define a leading side and a trailing side 36. A mounting bracket or support member 40 is coupled to the lower end of the drawbar 20. A scraper 42 is in turn a mounted to the support member 40. The scraper is formed with a scraping edge 44 that is held in contact with the trailing side 36 of the disk as described below. A liquid fertilizer tube 48 is attached to the rear of the scraper by a bracket 50. A dry tube 52 is located behind of the liquid tube 48 and is separately attached to the drawbar 20.

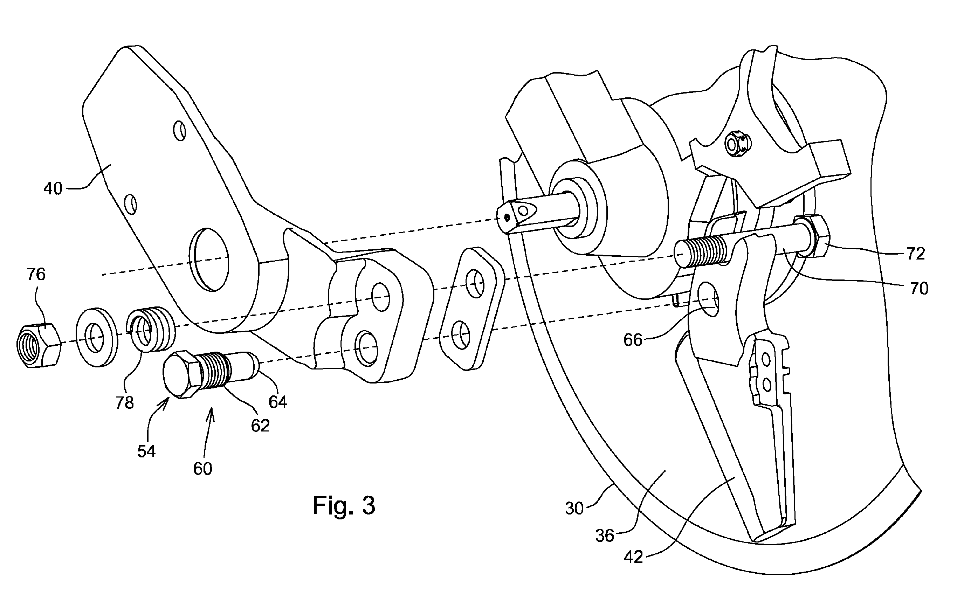

The scraper 42 is coupled to the mounting bracket 40 by a two point coupling having a first point 54 and a second point 56. The first point coupling comprises a stud 60 having a threaded portion 62 that is threaded into the mounting bracket 40. The stud 60 ends in a ball 64. The ball 64 is seated into a socket 66 formed in the scraper 42. A three axes system is shown in Fig. 3 with the x and y-axes in the plane of the paper and the z-axis extending perpendicularly therefrom. The ball and socket connection allows rotation of the scraper about all three orthogonal axes.

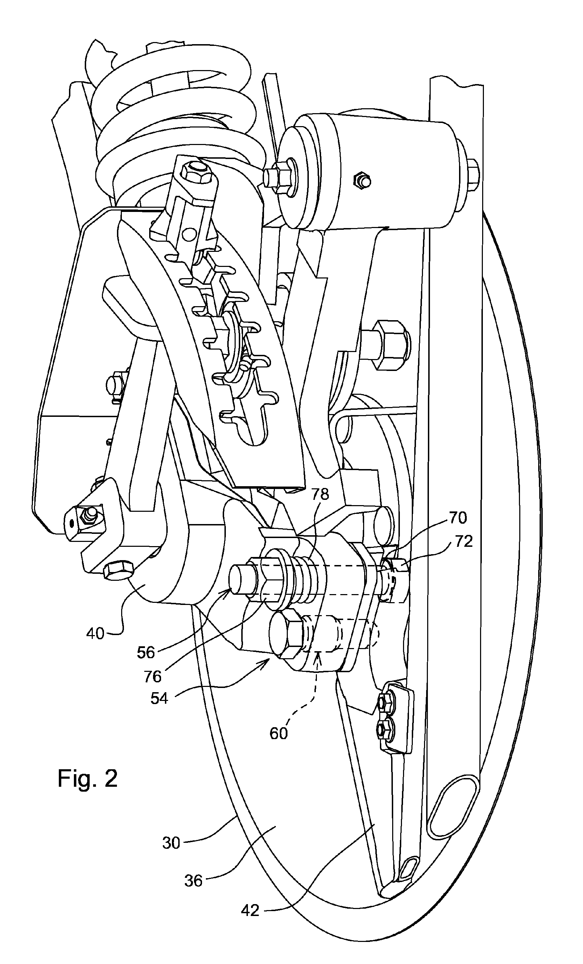

The second connection point 56 consists of a bolt 70 having a hex head 72 seated into the hex shaped socket 74 in the scraper 42. The bolt 70 extends through the mounting bracket 40 and has a nut 76 threaded onto the distal end. The bolt 70 passes through the mounting bracket 40, it is not threaded into the mounting bracket. A compression spring 78 is placed on the bolt 70 between the mounting bracket 40 and the nut 76. The spring is compressed such that it forces the bolt 70 to the left as viewed in Fig. 2. This rotates the scraper 42 about the x-axis, pulling the upper end of the scraper to the left as viewed in Fig. 2. This moves the lower end of the scraper in the opposite direction, urging the scraping edge 44 against the trailing side 36 of the disk 30. The second connection 56 also prevents rotation of the scraper about the z-axis while permitting rotation about the x and y-axes. The connections 54 and 56 are oriented such that the y-axis, which extends through the centers of the two connections, also extends downward through the scraping edge 44. The biasing moment of the spring 78 acts about the x-axis whereby the perpendicular y-axis crosses of the scraping edge 44. As a result, the reaction force acting on the scraping edge 44 counters the biasing moment of the spring without causing rotation of the scraper about the y-axis. Rotation about the y-axis would create a gap between the scraper edge 44 and the blade at one end of the scraper edge. The two point connection of the scraper enables the scraper to "float" that is to rotate about the x and y-axes to maintain contact with the disk as the disk flexes.

Various modifications can be made to the embodiment shown within the scope of the invention. For example, the bolt 70, instead of being biased by the spring can be threaded into the mounting bracket 40 and held rigid, positioning the scraper 42 into a fixed position that bears against the disk 30. As another alternative, the relative positions of the ball stud 60 and bolt 70 can be reversed with the ball stud positioned on the top and of the bolt 70 and spring 78 positioned to push the scraper away from the mounting bracket and toward of the disk 30. Yet another alternative, the ball stud 60 can be threaded to the scraper and seated into a socket formed in the mounting bracket 40, or the scraper can be cast with an integral spherical stud in place of the separate threaded stud.

An advantage of the mounting structure compared to some previous designs having a single axis pivot is that the present invention does not have to be made to tight tolerances. The disk and scraper of the present invention can be used in a variety of ground engaging implements including a fertilizer applicator, planter, grain drill, air seeder or other seeding equipment or tillage or grading equipment where a disk is used and a scraper desired to remove soil from the disk.

## Claims

1. A ground engaging machine having an opener assembly (10) comprising a disk blade (30), a support member (40), and a scraper (42) having a scraper edge (44), **characterized in that** a ball and socket mechanism coupling the scraper (42) to the support member (40) for pivotal motion, and a biasing mechanism urging the scraper edge (44) into contact with the disk blade (30).

2. The machine as defined in claim 1 wherein the ball and socket mechanism forms a first connection point (54) and the biasing mechanism forms a second connection point (56) of a two point coupling of the scraper (42) to the support member (40).

3. The machine as defined in claim 2 wherein the first connection point (54) allowing rotation of the scraper (42) about three orthogonal axes (x, y, z) and the second connection point (56) restricting rotation about one of the axes (z) and biasing the scraper edge (44) into contact with the disk blade (30).

4. The machine as defined in one of the claims 1 to 3 wherein the ball and socket mechanism and the biasing mechanism are positioned such that a line (y-axis) perpendicular to a biasing moment axis (x) and extending from the ball and socket mechanism pivot point crosses the scraper edge (44).

5. The machine as defined in one of the claims 1 to 4 wherein the biasing mechanism includes a spring member (78).

6. The machine as defined in one of the claims 1 to 5 wherein the biasing mechanism includes a bolt (70) extending through the scraper (42) and the support member (40) and a spring (78) acting on the bolt (70).

7. The machine as defined in one of the claims 1 to 6 wherein the ball and socket mechanism includes a socket (66) formed in the scraper (42) and a stud (60) extending from the support member (40) having a ball end (64) seated in the socket (66).

8. The machine as defined in one of the claims 1 to 6 wherein the ball and socket mechanism includes a socket (66) formed in the support member (40) and a stud (60) extending from the scraper (42) having a ball end (64) seated in the socket (66).
